# EUROPEAN PATENT APPLICATION

(11) **EP 1 130 683 A1**
(43) Date of publication of application: **05.09.2001**
(21) Application number: 00200702.9
(22) Date of filing: 29.02.2000
(51) Int. Cl.: H01R 4/36

(54) **Power distribution device**

(71) Applicant: GE Power Controls Belgium, besloten vennootschap met beperkte aansprakelijkheid, 9000 Gent (BE)
(72) Inventor: Forré, Danny, 9940 Evergem (BE); De Buysscher, André, 9700 Oudenaarde (BE)
(74) Representative: Debrabandere, René

(57) **Abstract**

The invention relates to a distribution device for the distribution of electrical power from at least one terminal (T) of an electrical switching apparatus, to a plurality of wires, comprising for each terminal (T) a body (1) of electrical conducting material provided with a number of cavities (10-15) for said wires and a corresponding number of threaded holes (16-21) for screws (22,23), and a housing (2) covering the body (1) and provided with openings (30-41) permitting access to the cavities (10-15) and to the holes (16-21). The body (1) has a protrusion (8) provided with an opening (9), projecting outside the housing (1), for direct fixation to the terminal (T).

## Description

This invention relates to a distribution device for the distribution of electrical power from at least one terminal of an electrical switching apparatus, particularly a breaker or switch, to a plurality of wires, comprising for each terminal a body of electrical conducting material provided with a number of cavities for said wires and a corresponding number of, at least partly, threaded holes for screws, and a housing covering the body and provided with openings permitting access to the cavities and to the holes.

Such distribution systems are especially used for connecting the three or four terminals of a breaker for relatively high currents of 160 A and more, mounted on a panelboard, to wires ending at circuit breakers for smaller currents. The terminals of such high current breaker are normally situated in cavities in an insulating housing, and a conductor may be fixed to a terminal by tightening a screw.

A known distribution device of the above-mentioned kind contains for each phase, and thus for each terminal of the breaker, an elongated block of conducting metal which is provided at one end with a set of cavities for receiving the outgoing wires which are locked to the block by tightening connection screws which are screwed in threaded holes ending perpendicularly in the first mentioned cavities.

The conductor for connection to the terminal is a separate wire, and the block is therefore provided with one big cavity at the opposite end wherein said wire is fixed by means of a screw tightened in a threaded hole ending perpendicularly in the cavity.

The block is surrounded with a housing of insulating material which has a lid in front of the last mentioned screw, and is provided with openings corresponding to the cavities and the threaded holes.

This known distribution device cannot be mounted directly on a terminal of a breaker, but has to be connected by a wire, which is complicated. Moreover, the wires for the different phases are not separated from each other by insulating material, this negatively influences the breaking capacity and the safety of the installer.

The aim of the invention is to avoid the above mentioned drawbacks and to provide in a distribution device which is safer and which permits a great power capacity for the switching apparatus.

According to the invention, this aim is accomplished in that the body of conductive material has a protrusion provided with an opening, projecting outside the housing, for direct fixation to a terminal of a switching apparatus.

Preferably the housing is provided with a number of additional openings for evacuating gases from the switching apparatus.

The housing can also comprise a tubular portion, also for evacuating gases from the switching apparatus.

The device may be a multi-phase distribution device and consists of several devices for one terminal as described above and the housings of the last mentioned devices are connected to each other by means of connection elements.

The invention will now be described by way of example and with reference to the accompanying drawings, in which:
Figure 1 is a front view of a distributing device for one phase according to the invention, mounted on a breaker;
Figure 2 is a perspective view, taken from above and thus with the front side upwards, of the body of the distributing device of figure 1;
Figure 3 is a sectional view according to line III-III in figure 2;
Figure 4 is a perspective view of the housing of the device of figure 1;
Figure 5 is a sectional view according to lines V-V in figure 4;
Figure 6 is a sectional view according to line VI-VI in figure 4;
Figure 7 is a sectional view similar to that of figures 3 and 5, but with the body mounted inside the housing;
Figure 8 is a perspective view of a connection element connected to the device of figure 7;
Figure 9 is a top view of a multi-phase device mounted on a breaker.

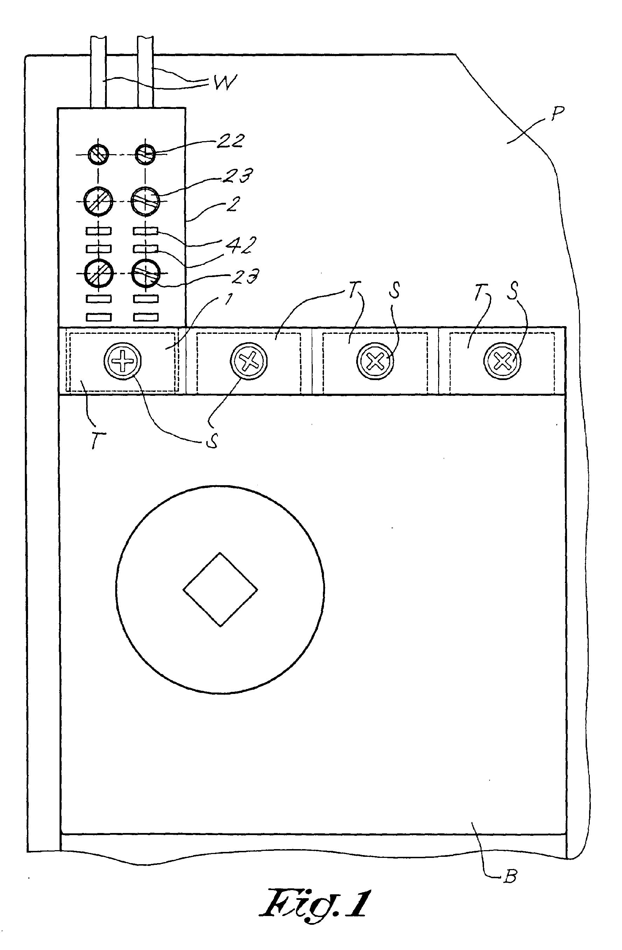

Figure 1 shows a mono-phase power distribution device, consisting of a body 1 of electrical good conducting material, such as copper, brass or aluminium, and a housing 2 of electrical insulating material such as plastic, which distributes electric power from one terminal of switching apparatus, formed by a load breaker B or switch, to a number of wires.

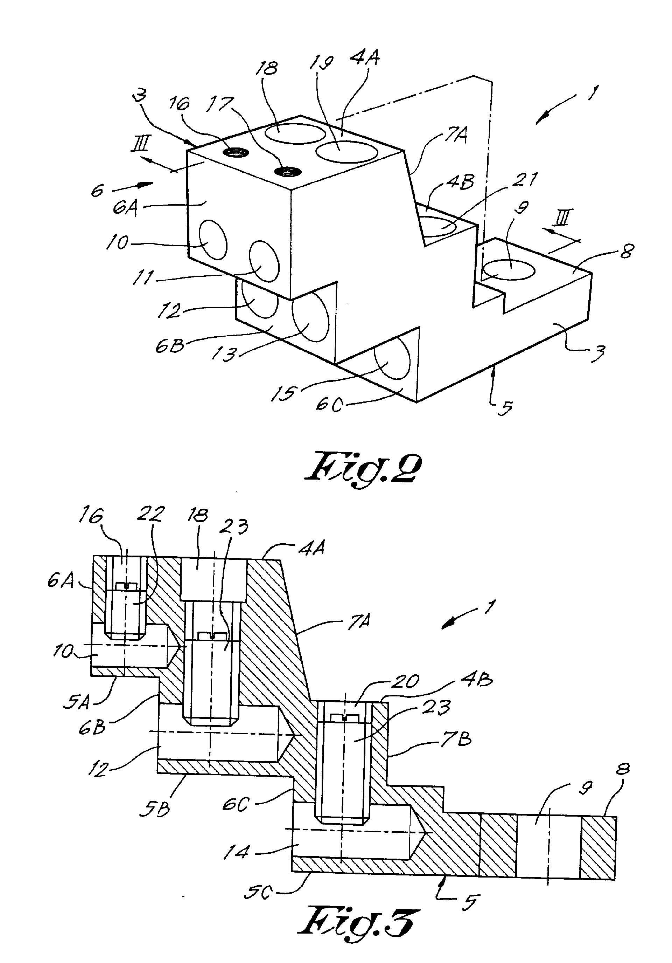

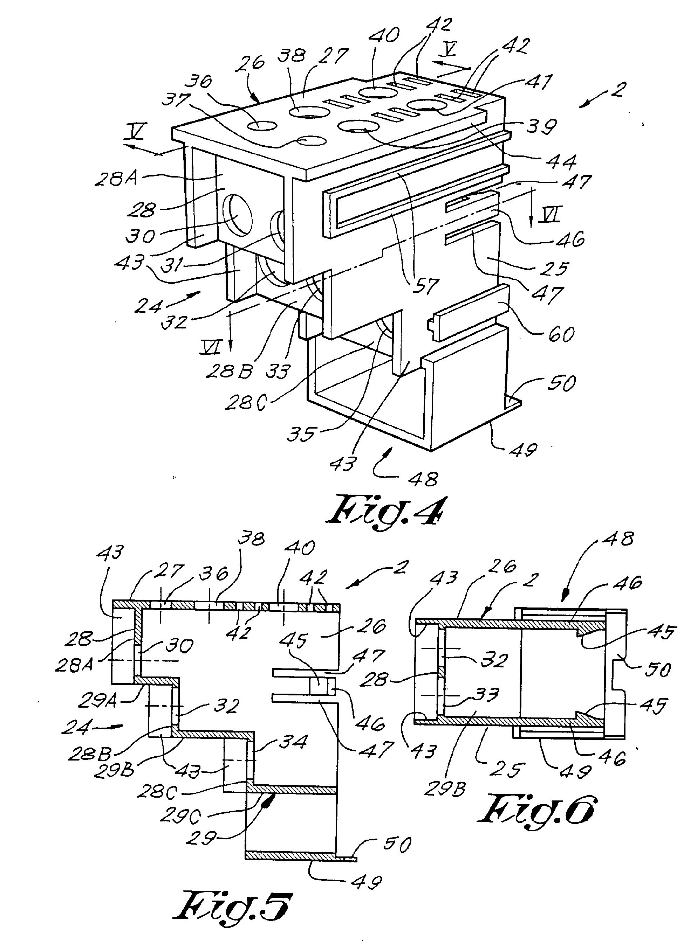

As shown in detail in figures 2 and 3, the body 1 is a massive block and has two parallel lateral outer faces 3, and a number of faces forming a front face 4, an opposite rear face 5, a first transversal face 6 and a second transversal face 7. In figures 2 and 3, the body 1 has been shown with its front face 4 upwards.

The body 1 is provided on its second transversal face 7 and against its rear side, with a protrusion 8 projecting outside the housing 2 for direct connection to the circuit breaker B.

An opening, which, in the example, is a round hole 9, extends through the protrusion 8. The opening may be a slotted hole instead.

The corner between the front face 4 and the transversal face 7 is cut off and between the front face 4 and the extension 8, the transversal face 7 consists of a slanting part 7A, a part 7B parallel to the face 5 and a part 7C perpendicular to the face 5.

Also the front face 4 comprises two parts 4A and 4B separated by the slanting part 7A.

The corner between the rear face 5 and the first transversal face 6, this is the corner opposite the protrusion 8, is stepwise cut off so that the rear face 5 consists of three parts 5A, 5B and 5C on different distances from the opposite front face part 4A, while the first transversal face 6 also consists of three parts 6A, 6B and 6C at different distances from the opposite second transversal face part 7B.

The body 1 is provided with six round cavities 10 to 15, extending perpendicular to the first transversal face 6 in two rows of three cavities. Two cavities 10 and 11 end in the part 6A, two cavities 12 and 13 end in the part 6B and the other two cavities 14 and 15 end in the part 6C.

The cavities 12, 13, 14 and 15 have the same diameter, the cavities 10 and 11 have both the same diameter but are smaller.

The body 1 is further provided with six holes 16, 17, 18, 19, 20 and 21, all ending perpendicularly in the front face 4. Two holes 20 and 21 end in the part 4B, the others in the part 4A.

The holes 16 and 17 end in the cavities 10 and 11, respectively, are completely threaded and contain a screw 22. The holes 18 to 21 are partly threaded, have a larger diameter than the holes 16 and 17 and respectively end in the cavities 12 to 15. They contain each a screw 23.

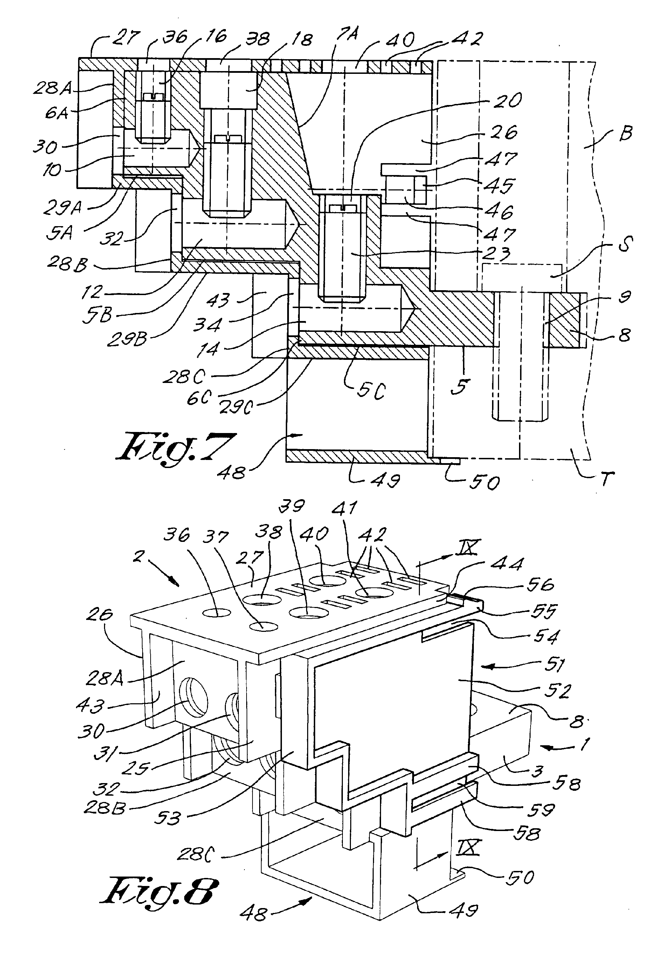

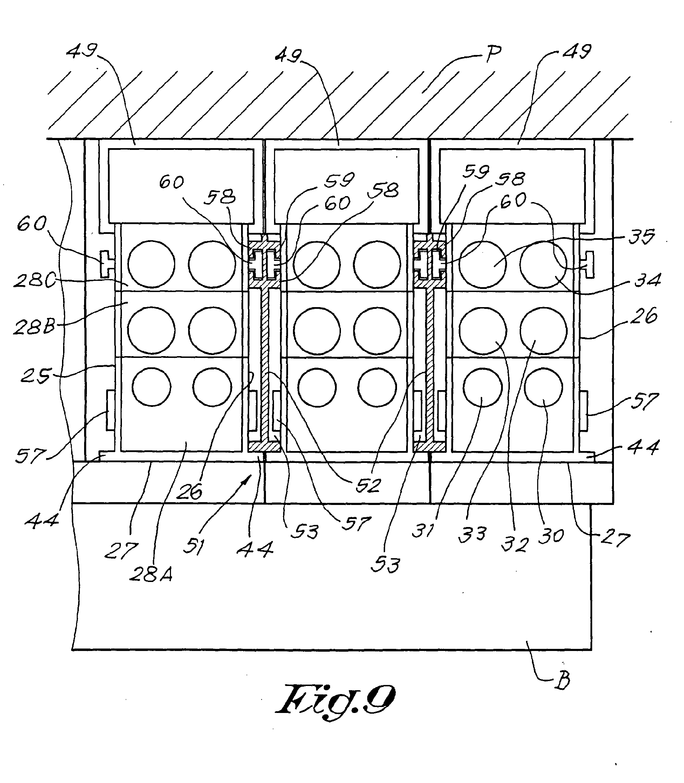

As shown in detail in figures 4 and 5, the housing 2 of plastic material comprises a portion 24 with a shape conform to the outer surface of the body 1 without cut off of the corner between de faces 4 and 7, which may be clicked over this body 1 as shown in figure 6.

Consequently, the housing 2 is open at the side of the second transversal face 7 and the protrusion 8 and comprises two lateral walls 25 and 26, a front wall 27 and opposite the open side a steps forming transversal-and-rear wall 28-29 with three steps and thus three transversal parts 28A, 28B and 28C, and three rear parts 29A, 29B, 29C.

The transversal wall parts 28A, 28B and 28C are each provided with two openings. All openings 30 to 35 in these parts are respectively situated in front of the cavities 10 to 15 and have the same diameters as the corresponding cavities 10 to 15.

Similarly, the front wall 27 is also provided with six openings 36 to 41 which are respectively situated in front of the holes 16 to 21, but which have however a smaller diameter than the corresponding diameter of the holes in order to retain the screws 22 or 23 inside the holes 16 to 21 so that they cannot get lost.

Moreover, the front wall 27 is provided with a pair of additional openings, more particularly, transversal slits 42, adjacent to, and at the rear side from each of the openings 38, 39, 40 and 41, for evacuating gases.

The lateral walls 25 and 26 protrude outside the transversal wall parts 28A, 28B and 28C and form ribs 43.

Also the front wall 27 protrudes to the same extend outside the wall part 28A.

The width of the front wall 27 is larger than the distance between the outer faces of the lateral walls 25 and 26, except at the open end, so that lateral ribs 44 are formed ending at a distance of the open side of the housing 2.

The portion 24 of the housing 2 is slightly deeper than the body 1, so that the portion of the transversal face 7 of the body 1 is situated at a small distance of the open side of the housing 2.

The teeth 45 on the inner side of two elastic lips 46 formed between slits 47 in the lateral walls 25 and 26 co-operate moreover with said portion of the transversal face 7 for retaining the body 1 inside the housing 2, as shown in figure 7.

Adjacent to the portion 24, a tubular portion 48 extending parallel to the front wall 27 is formed by means of a wall 49 on the rear part 29C.

This tubular portion 48 has a rectangular section with the same width as the front wall 27. The outmost part of the wall 49 projects with an edge 50 outside the lateral walls 25 and 26.

When the device is mounted on a breaker B, as shown in figures 1 and 7, the protrusion 8 is inserted along a terminal T in a hole of the housing of the breaker B and fixed to the terminal T by means of a screw S.

To facilitate the connection, the protrusion 8 may, as already mentioned, be provided with a slotted hole or slit extending up to the free end of the protrusion 8 instead of a round hole so that it may be slid over the screw S without having to remove this screw.

The housing 2 abuts the housing of the breaker B, whereby the projecting edge 50 extends along the rear side of a part of the breaker housing.

Connection wires W are inserted in the cavities 10 to 15 and locked by tightening the corresponding screws 22 and 23.

Eruption gases, possibly resulting from the interruption of the power supply by the breaker B, can escape from the breaker B, on the one hand, through the housing 2 and the slits 42 in the front wall 27 and, on the other hand, through the tubular portion 48 which faces a gas evacuation opening in the housing of the breaker B.

The cut off of the corner between the front face 4 and the transversal face 7 of the body 1 gives more room for said gases and the slanting part 7A guides the gases towards the slits 42 and the openings 20 and 21 in the front face 4.

On each terminal T, a device as described above for one phase may be mounted.

Three or four of such devices will thus be situated next to each other, but the phases will be completely separated from each other without additional separation elements.

In a variant of the invention, the housings 2 of the different mono-phase devices are integrated into one piece.

Preferably, however, the housings of the devices are connected to each other by means of connection elements 51, as shown in figures 8 and 9.

Such connection element 51, is formed by a wall 52, bordered at the front and top side by a rib 53 projecting on both sides.

Parallel to the wall 52, the shape of a connection element 51 is approximately the same as the inner shape of the portion 24 of the housing 2 and the element 51 fits along a lateral wall 25 or 26 between the rib 44 of the front wall 27 and the wall 49 of the tubular portion 48, as shown in detail in figure 8.

The wall 52 is provided, along the bottom end of the rib 53, with a cut-out 54 so that at this end an elastic finger 55 is formed which is provided on its outer side with a tooth 56.

This tooth 56 is clicked behind the bottom end of the ribs 44 of two adjacent housings 2.

When introducing the connection element 51 between two housings 2, the finger 55 is guided between these ribs 44 and the ribs 57 on the lateral walls 25 and 26 of two adjacent housings 2.

The connection element 51 is further connected to both adjacent housings 2 by means of ribs 58 provided over their complete length with a T-shaped groove 59 and extending parallel to the finger 55, but near the rear side.

The ribs 58 are slid with their groove 59 over the ribs 60 with a corresponding T-profile formed on the outside of both lateral walls 25 and 26 of the adjacent housings 2.

As can be seen in figure 9, the ribs 44 of the front walls 27 of the housings 2 and the tubular portions 48 are practically in contact with each other.

No connection wires or bars are needed between the terminals T of the breaker B and the distribution device or devices. The different phases are completely isolated from each other without additional insulation pieces.

The installation of the device is rapid and easy.

The special shape of the body 1 with two corners cut off permits to economize conducting material and decreases the weight of the device.

The device is consequently very cost efficient and has a high resistance against short circuits. The housing 2 also forms a finger protection for the user. The device is of IP-20 protection class.

The number of cavities in each mono-phase device has only been given as example. The number of cavities and also threaded holes may be more than six, for example eight.

Also the breaker does not necessarily have to be mounted on a panel board P as shown in figure 1 and the position of a device.

## Claims

1. Distribution device for the distribution of electrical power from at least one terminal (T) of an electrical switching apparatus, particularly a breaker (B) or switch, to a plurality of wires (W), comprising for each terminal (T) a body (1) of electrical conducting material provided with a number of cavities (10-15) for said wires and a corresponding number of, at least partly, threaded holes (16-21) for screws (22,23), and a housing (2) covering the body (1) and provided with openings (30-41) permitting access to the cavities (10-15) and to the holes (16-21), characterized in that the body (1) of conductive material has a protrusion (8) provided with an opening (9), projecting outside the housing (1), for direct fixation to the terminal (T) of the switching device, for example the breaker (B).

2. Distribution device according to claim 1, characterized in that the housing (2) is provided with a number of supplemental openings (42) for evacuating eruption gases from the switching device (B).

3. Distribution device according to claim 2, characterized in that the housing (2) has a front wall (27) which is provided with openings (36-41) facing the at least partly threaded holes (16-21) in the body (1), and in that the supplemental openings (42) are in the front wall (27) of the housing (2).

4. Distribution device according to claim 3, characterized in that facing the supplemental openings (42), a corner of the body (1) has been cut off.

5. Distribution device according to any one of the preceding claims, characterized in that the housing (2) comprises a tubular portion (48) for evacuating eruption gases from the switching apparatus (B).

6. Distribution device according to claims 3 and 5, characterized in that the tubular portion (48) of the housing (2) is situated at the side opposite the front wall (27).

7. Distribution device according to any one of the preceding claims, characterized in that the housing (2) is open at the side where the protrusion (8) projects outside the housing (2).

8. Distribution device according to any one of the preceding claims, characterized in that the body (1) is limited by two parallel lateral faces (3), a front face (4), an opposite rear face (5), a transversal face (7) provided with the protrusion (8) and an opposite transversal face (6).

9. Distribution device according to claim 8, characterized in that the corner between the transversal face (6) opposite the one with the protrusion (8) and the rear face (5), is cut off stepswise and that the first mentioned transversal face (6) is composed of several parts (6A, 6B, 6C) successively at a shorter distance from the other transversal wall (7).

10. Distribution device according to any one of the preceding claims, characterized in that the housing (2) is clicked over the body (1) by means of elastic lips (46) provided with a tooth (45) formed in the walls of the housing (2).

11. Distribution device according to any one of the preceding claims, characterized in that it is a multi-phase distribution device and consists of several devices for one terminal according to any one of claims 1 to 9, the housings (2) of the last mentioned devices being connected to each other by means of connection elements (51).

12. Distribution device according to claim 11, characterized in that a connection element (51) is connected to two adjacent housings (2) by at least one elastic finger (55) provided with a tooth (56) cooperating with edges of ribs (44) on lateral walls (25,26) of two adjacent housings (2) and by means of at least one rib-and-groove connection with each of said lateral walls (25,26).

13. Distribution device according to claim 12, characterized in that the connection element (51) comprises a wall (52) provided with a rib (53) on a part of its edge, the finger (55) being formed by an end part of said rib (53), while each rib-and-groove connection comprises a rib (60) with a thickened edge on the one hand, and a rib (58) with a corresponding groove (59), on the other hand.
